# EUROPEAN PATENT APPLICATION

(11) **EP 1 734 310 A2**
(43) Date of publication of application: **20.12.2006**
(21) Application number: 06012009.4
(22) Date of filing: 12.06.2006
(51) Int. Cl.: F24D 3/16

(54) **Heating and cooling panel and heating and cooling wall formed therewith**

(30) Priority: 13.06.2005 IT MI20051099
(71) Applicant: Idrotecnoclima S.A.S., 70020 Cassano delle Murge BA (IT)
(72) Inventor: Desimini, Gaetano, Riccardo, 70028 Sannicandro Di Bari (BA) (IT)
(74) Representative: Petruzziello, Aldo

(57) **Abstract**

A heating and cooling panel (1) comprises a plasterboard layer (2), a layer of insulating material (3), and at least one heat exchanger (4), in the form of a coiled pipe, provided with two terminals (40) for entry and exit, respectively, of the heating and cooling fluid. In one edge of the panel (1), in the layer of insulating material (3), there are formed a plurality of outwardly open recesses (7) wherein are disposed the terminals (40) of said heat exchangers (4) so as not to protrude outward from the edge of said panel (1).

## Description

The present invention refers to a heating and cooling panel and a heating and cooling wall formed therewith.

For heating and cooling of a building, use is generally made of prefabricated plasterboard and insulation panels provided with pipes wherein the heating or cooling fluid can flow. Said panels are assembled with one another so as to form a wall, a floor or a roof of a building. Such a type of panel is disclosed in European patent application EP 1.004.827. However, this panel presents some drawbacks.

The end parts of the pipes protrude outward from the edge of the panel so as to be able to be connected to the connections or pipe fittings of an header that distributes the heating and cooling fluid. This can lead to damage to the panel during transport, especially when passing in narrow spaces, such as corridors and stairs. In fact the exposed end parts of the pipes are subject to knocks which can compromise their subsequent joining to the header connections, with the result of possible leakage of the heating and cooling fluid.

Furthermore the end parts of the pipes in the panels comprise flexible pipes which are suitably bent or crossed over to be connected correctly to the connections of the supply header or the return header. Since the connections of the supply header are near the connections of the return header, it may often happen that the end of the piping of the panel is connected to the wrong header connection, with the result of interrupting the hydraulic circuit in that panel.

It must further be considered that these panels are mounted by means of supporting frames in the form of metal sheet with C-shape cross-section. Because of the particular shape of the panels, wherein the edge of the plasterboard protrudes more than the edge of the insulating material to allow the end parts of the piping to protrude, the frame disposed between two adjacent panels rests on the plasterboard, whilst the frame disposed over the panel rests on the insulating material. As a result there are frames disposed on two different levels, with the consequent complications in installation.

Another drawback of such panels of the prior art is represented by the fact that they are subject to the formation of cracks, because of the thermal expansion due to the plastic piping and to the plasterboard which are subjected to large ranges of temperature.

Object of the present invention is to overcome the drawbacks of the prior art by providing a heating and cooling panel that is versatile, practical and easy for the user to install.

Another object of the present invention is to provide such a heating and cooling panel that is able to form a heated and cooled wall that is efficient and at the same time reliable.

These objects are achieved in accordance with the invention with the characteristics listed in appended independent claim 1. Advantageous embodiments of the invention are apparent from the dependent claims.

The heating and cooling panel according to the invention comprises a plasterboard layer, a layer of insulating material and at least one heat exchanger in the form of a coiled pipe, provided with two ends for entry and exit, respectively, of the heating and cooling fluid. In one edge of the panel, in the layer of insulating material, a plurality of outwardly open recesses are formed, in which the ends of said heat exchangers are disposed so as not to protrude outward from the edge of the panel.

Further characteristics of the invention will be made clearer by the detailed description that follows, referring to a purely exemplifying and therefore non-limiting embodiment thereof, illustrated in the appended drawings, in which:
Figure 1 is a top plan view of a heating and cooling panel according to the invention;
Figure 2 is a bottom plan view of the panel of Figure 1;
Figure 3 is partially broken off sectional view taken along the sectional plane III-III of Figure 1;
Figure 4 is a partially broken off sectional view taken along the sectional plane IV-TV of Figure 1;
Figure 5 is a top plan view, illustrating four panels partially broken off, connected to the supply and return headers;
Figure 6 is a bottom plan view of the four connected panels of Figure 5;
Figure 7 is a sectional view, partially broken off, taken along the sectional plane VII-VII of Figure 5, illustrating the connection of two adjacent heated and cooled panels;
Figure 8 is a sectional view like Figure 7, but illustrating the connection between a heated and cooled panel and a neutral panel.
Figure 9 is a plan view of a double header;
Figure 9A is a partially cross sectional view taken along the sectional plane A-A of Figure 9;
Figure 10 is a plan view of a supply header and a return header;
Figures 10B and 10C are partially cross sectional views taken along the sectional planes B-B and C-C of Figure 10;
Figure 11 is a sectional view illustrating the clearance left between the heating and cooling panel and the masonry wall; and
Figure 12 is a sectional view illustrating a thermal dilation joint placed between the edge of the panel and the wall.

The heated and cooled panel according to the invention, denoted as whole with reference numeral 1, is described with the aid of the figures.

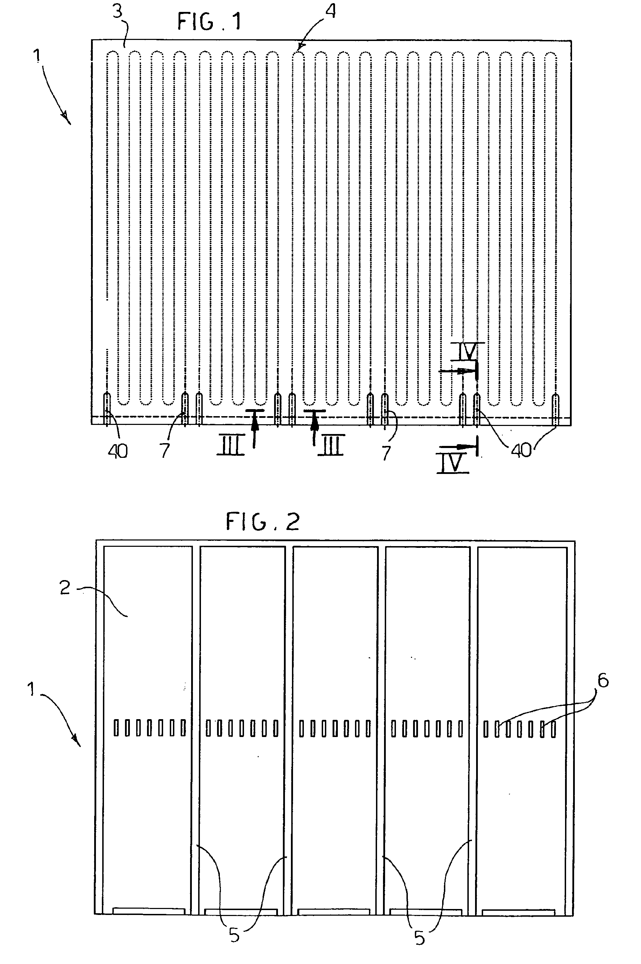

With reference for now to Figures 1 and 2, the panel 1 is substantially rectangular in shape, measuring 1,500 mm x 1,225 mm with a thickness of 47 mm. These measurements are drastically reduced with respect to panels of the prior art, to facilitate movement thereof through particularly narrow places of passage and installation. The weight of the panel 1 is lower than 30 kg to allow it to be moved by a single operator.

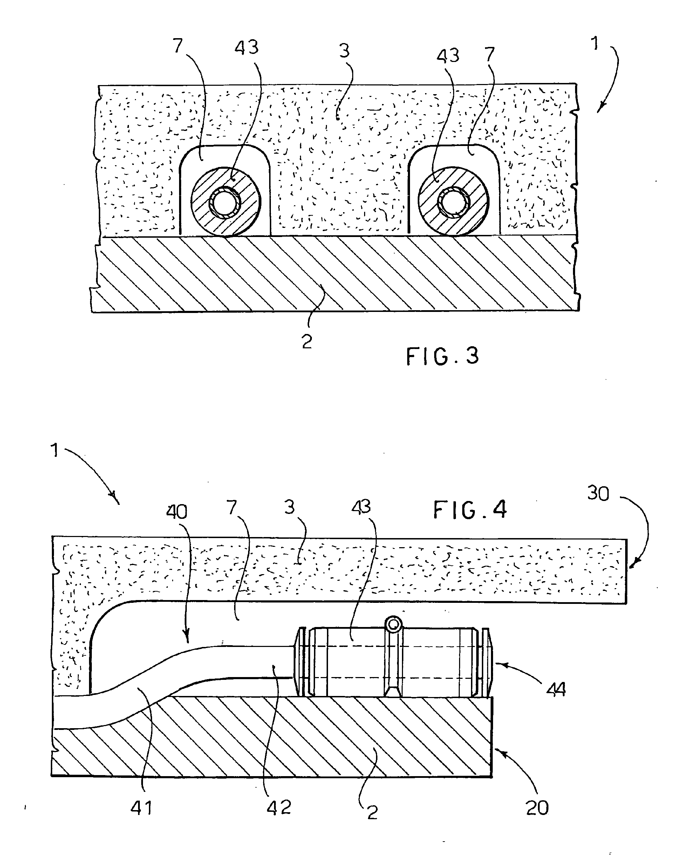

As shown in Figures 3 e 4, the panel 1 comprises two layers: a bottom or front plasterboard layer 2 and top or back layer 3 of insulating material, such as foamed polystyrene, for example. The insulating layer is almost twice as thick as the plasterboard layer.

Five heat exchangers 4, in the form of pipes disposed in a coil which occupy substantially the entire surface of the panel to maximise heat exchange, are integrated in panel 1. The heat exchangers are embedded in the layer of plasterboard 2 or are disposed in special grooved seats formed in the rear surface of the plasterboard layer 2.

As shown in Figure 2 on the front surface of the plasterboard 2 there are formed, for example by laser marking or spray paint, four longitudinal lines 5 between one exchanger 4 and another, so that the panel 1 can be cut lengthwise along the lines 5 to obtain smaller, hydraulically independent heated and cooled sub-panels. Furthermore, on the front surface of the plasterboard 2 notches 6 are made which indicate the portions of panel free from the pipes of the heat exchangers 4, to indicate where nails or fixing screws can be applied without the risk of puncturing the pipes.

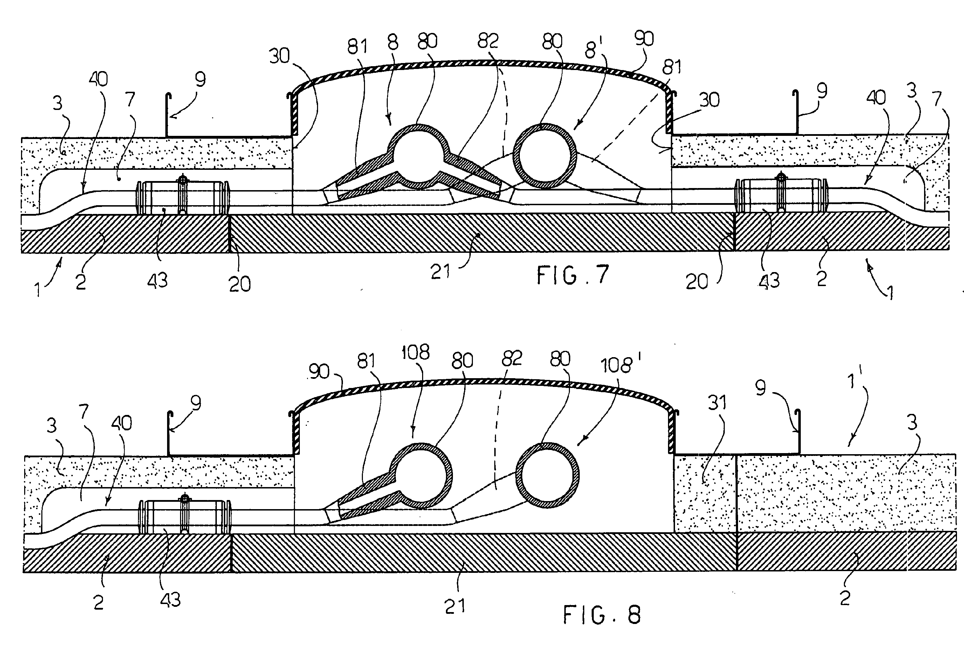

In one edge of the panel 1, ten outwardly open recesses 7 are formed. As shown better in Figures 3 and 7, the recesses 7 are formed in the layer of insulating material 3 and as shown in Figure 4, in the side of the panel in which the recesses 7 are formed the edge 30 of the insulating layer 3 protrudes more than the edge 20 of the plasterboard layer.

As shown in Figure 1, each recess 7 receives a respective end portion 40 of the exchanger and each exchanger 4 has two end portions 40 for entry and exit of the heating and cooling fluid.

As shown in Figure 3, the end portion 40 of the pipe of the heat exchanger 4 has an upwardly curved portion 41 and a straight portion 42 which extends into the recess 7 up to the edge 20 of the plasterboard 2. A quick coupling connector 43 which has the form of a cylindrical coupling 43 with an inlet opening 44 adapted to receive the end of a pip or tube is fixed on the straight portion 42 of the terminal portion of the pipe.

The free end of the quick coupling connector 43 is disposed flush with the edge 20 of the plasterboard. In this manner the quick coupling connector 43 remains well protected inside the recess 7 and the protruding part of insulating material 3 further improves the protection of the quick coupling connector 43.

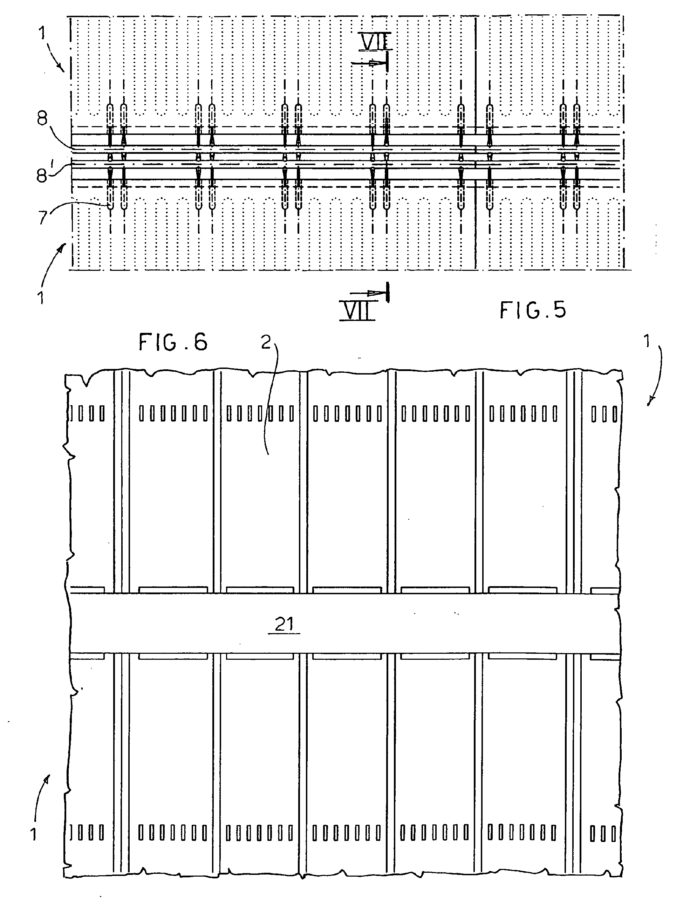

As shown in Figure 5, for installation of a heated and cooled wall, the panels 1 are disposed on one side and the other with respect to an inlet header 8 for entry of the heating and cooling fluid and an outlet header 8' for exit of the heating and cooling fluid, substantially the same as the inlet header. The sides of the panels provided with the recesses 7 face towards the two headers 8, 8' disposed parallel to one another.

As shown in Figure 7, a plasterboard panel 21, whereon are positioned the two headers, inlet 8 and outlet 8', is disposed between the edges 20 of the plasterboard layer of two panels 1.

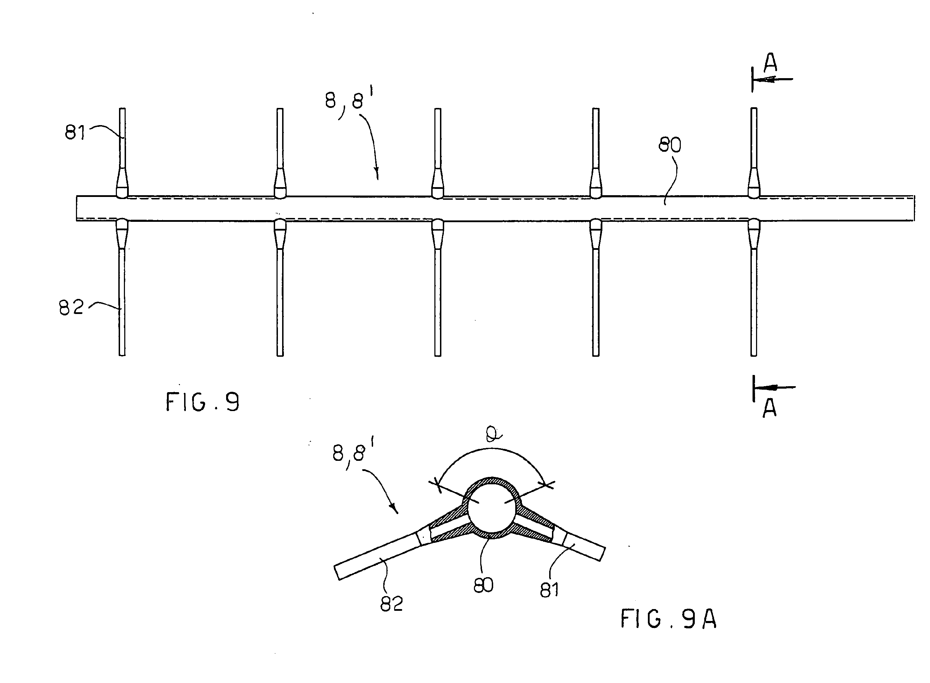

As shown in Figure 9, each inlet 8 or outlet 8' header comprises a main tube 80 which extends fro the whole length of the heated and cooled wall to be installed. Connecting tubes 81 and 82, facing one way and the other so as to be able to serve simultaneously two panels 1 disposed on one side and the other of the header 8 branch out radially from the main pipe 80. For this reason the headers 8, 8' are called double header racks, since they are provided wit two rows of radial connecting tubes.

The connecting tubes 81 and 82 are disposed in pairs on the same transverse plane and, as shown in Figure 9A, their axes are spaced apart from one another by an angle θ comprised between 120° and 150°, preferably 135°. The connecting tubes 81 of one side are shorter than the connecting tubes 82 of the other side.

As shown in Figure 7, the shorter connecting tubes 81 are inserted into the quick coupling connectors 43 of the inlet terminal portions 40 of the exchangers 4 of the panel facing towards the supply header 8. The longer connecting tubes 82 of the supply header 8, on the other hand, pass beneath the main pipe 80 of the return header 8' and are inserted into the quick coupling connectors 43 of the inlet terminal portions 40 of the exchangers 4 of the panel facing towards the return header 8'.

In a like manner the return header 8' is used, in which the shorter connecting tubes 81 are inserted into the quick coupling connectors 43 of the panel facing towards the return header 8' ad the longer connecting tubes 82 pass beneath the main tube 80 of the supply header 8 to be inserted into the quick coupling connectors 43 of the outlet terminal portions of the panel facing towards the supply header 8.

Clearly the two headers 8, 8', supply and return, are installed so that the connecting tubes 81 and 82 of the supply header 8 are disposed offset with respect to the connecting tubes 81 and 82 of the return header 8' by a distance equal to the centre distance between the outlet terminal portion 40 of one heat exchanger 4 and the inlet terminal portion 40 of the adjacent exchanger. This centre distance can be selected to be equal to about 45 mm.

Again with reference to Figure 7, respective sheet metal frames 9 in the form of sections with a C-shaped cross-section are disposed on the layer of insulating material 3, for coupling to supporting structures. The sections 9 are disposed flush with the edges 30 of the layer of insulating material. Between said frames 9 there is disposed a covering of insulating material 90, for example foamed polyethylene with a reflecting outer surface, which covers the headers 8 and 8'.

It should be noted that the frames 9 are disposed on a single level, so that the contact of the panel 1 with the metal frame 9 takes place only on the insulating layer and not on the plasterboard layer, which is the heating element. This minimizes heat loss.

As shown in Figure 8, the heated and cooled wall can be completed with neutral panels 1' without heat exchangers. In this case a compensation strip 31 of insulating material such as foamed polystyrene is inserted above the intermediate layer of plasterboard 21 and in abutment against the edge of the insulating layer 3 of the neutral panel. The sheet metal section 9 is fixed on the compensation strip 31.

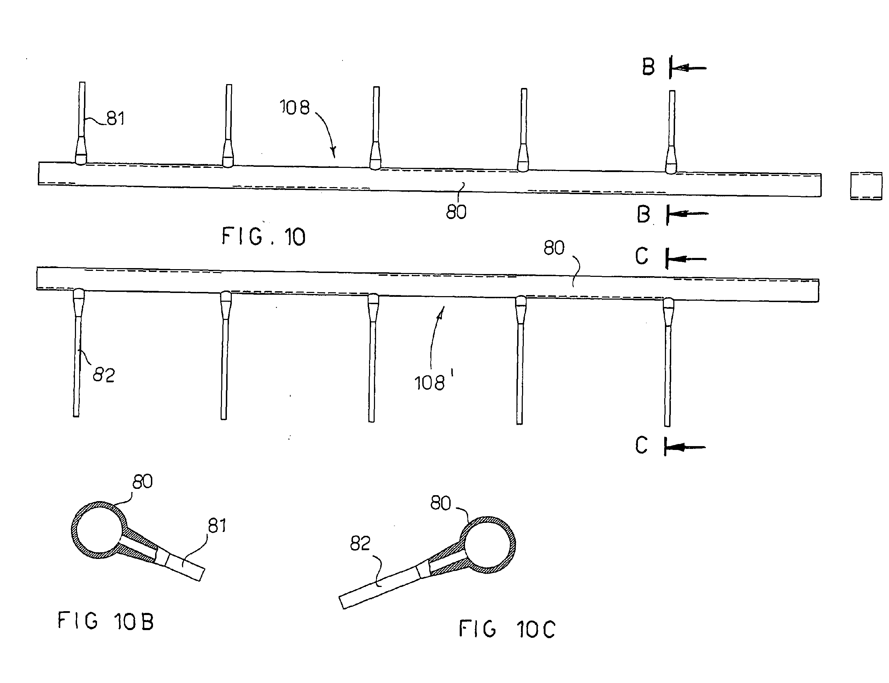

Furthermore, in this case the header racks supply 108 and return 108' are not double, but single. That is to say, as shown better in Figures 10, 10B e 10C, the supply header 108 and the return header 108' have respectively a series of shorter connecting tubes 81 and a series of longer connecting tubes 82 which protrude radially only from one side of the main tube 80.

In this manner the supply header 108 is disposed nearer the side of the heated and cooled panel 1 with the recesses 7, so that its shorter connecting tubes 81 are inserted in the quick coupling connectors 43 of the inlet terminals of the exchangers 4 of the heated and cooled panel 1. The return header 108' is disposed parallel to the supply header 108 so that the longer connecting tubes 82 pass beneath the main pipe 80 of the supply header 108 and are inserted into the quick coupling connectors 43 of the outlet terminals of the exchangers 4 of the heated and cooled panel 1.

It must be considered that the double 8, 8' and single 108, 108' header racks allow simple, intuitive assembly. In fact a header has the same length as a panel 1. The connectors 81 and 82 of the header have a centre distance equal to the centre distance between the inlet or outlet terminals 40 of each exchanger 4. Therefore, when the first header 8, 108 is assembled, the connectors 81 of one row of the header engage in all the quick couplings 43 of the inlet terminals 40, leaving the quick couplings of the outlet terminals free. Consequently, the connectors of the second header 8', 108' must perforce be inserted into the quick coupling connectors 43 of the outlet terminals, without any possibility of connection errors.

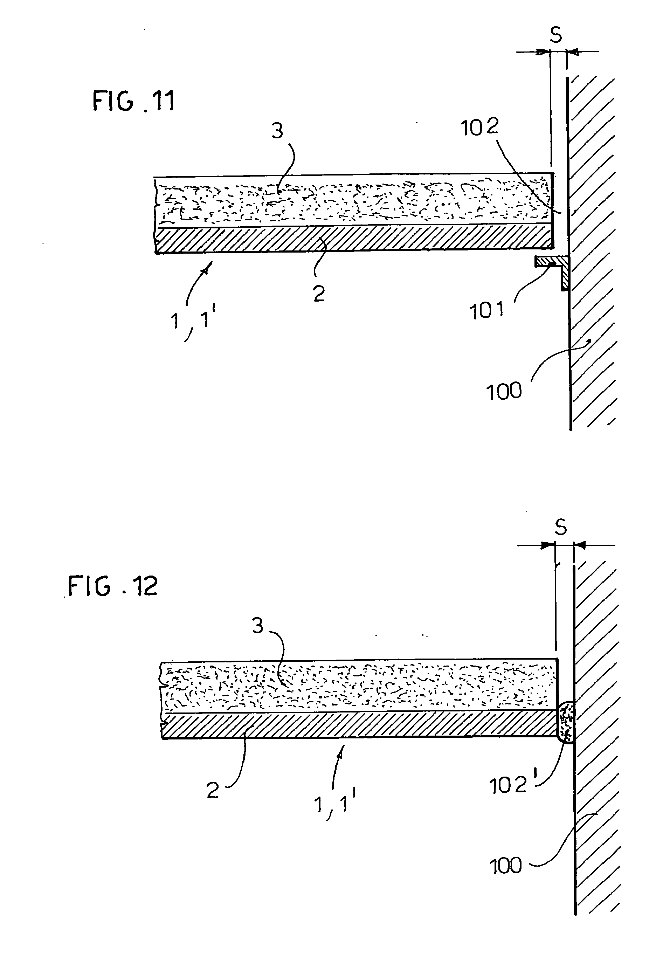

Furthermore, as shown in Figure 11, a wall formed of heated and cooled panels 1 and neutral panels 1', is disposed on a section 101 with an L-shaped cross-section fixed to a concrete wall 100. In this manner the peripheral edge of the heated and cooled wall is situated at a distance S of about 10 mm from the concrete wall 100 so as to leave an air space 102 which acts as a peripheral expansion joint, able to act as insulation and compensate for possible thermal expansion of the heated and cooled wall.

As shown in Figure 2, the peripheral expansion joint can also be made with a gasket 102 of material such as foamed polyethylene, polystyrene, rubber and the like provided with one or two adhesive sides to be fixed to the edge of the panel 1, 1' and to the concrete wall 100.

## Claims

1. A heating and cooling panel (1) comprising: a plasterboard layer (2), a layer of insulating material (3), and at least one heat exchanger (4) in the form of a coiled pipe, provided with two terminals (40) for entry and exit respectively of the heating and cooling fluid, **characterized in that** in one edge of said panel (1), in the layer of insulating material (3), there are formed a plurality of outwardly open recesses (7), wherein are disposed the terminals (40) of said heat exchangers (4) so as not to protrude outward from the edge of said panel (1).

2. A panel according to claim 1, **characterised in that** the end of each terminal (40) of the exchanger is flush with the edge (20) of the plasterboard layer and the edge (30) of the layer of insulating material protrudes further outward than the edge (20) of the plasterboard layer.

3. A panel according to claim 1 or 2, **characterised in that** in each terminal (40) of the exchanger there is provided a quick coupling connector (43) disposed inside said recess (7) designed to couple with a connecting tube of a header.

4. A panel according to any one of the preceding claims, **characterised in that** said layer of insulating material (3) is made of foamed polystyrene.

5. A panel according to any one of the preceding claims, **characterized in that** on the outer surface of the plasterboard layer (2) longitudinal lines (5) are provided between one heat exchanger and the next and notches (6) which indicate the portions of panel free from the pipes of the exchangers.

6. A heated and cooled wall comprising a plurality of heated and cooled panels (1) according to any one of the preceding claims, **characterised in that** it comprises at least one header rack (8, 8'; 108, 108') comprising a main pipe (80) wherefrom radially branches at least one row of connecting tubes (81, 82) adapted to be connected with the terminals (40) of said exchangers (4).

7. A heated and cooled wall according to claim 6, **characterised in that** it comprises a supply header rack (108) provided with a row of connecting tubes (81) which engage in the quick coupling connectors (43) of the inlet terminals of the heat exchangers and a return header rack (108') disposed parallel to the supply header rack (108), and provided with a row of longer connecting tubes (82) which pass beneath the main pipe of the supply header rack (108) to engage in the quick coupling connectors (43) of the outlet terminals of the heat exchangers.

8. A heated and cooled wall according to claim 6 or 7, **characterized in that** it comprises two double header racks (8, 8'), each double header rack comprising a first row of shorter connecting tubes (81) to engage in the quick coupling connectors (43) of the outlet terminals of the heat exchangers of the panels disposed on one side of the header and a second row of longer connecting tubes (82) to engage in the quick coupling connectors (43) of the outlet terminals of the heat exchangers of the panels disposed on the other side of the header.

9. A heated and cooled wall according to claim 8, **characterized in that** in said double header rack (8, 8') the shorter connecting tubes (81) are disposed on the same transverse plane as the longer connecting tubes (82) and spaced angularly apart therefrom by an angle (θ) comprised between 120° and 150°.

10. A heated and cooled wall according to any one of claims 6 to 9, **characterized in that** said headers (8, 8', 108, 108') are supported on a layer of plasterboard (21) disposed between the edges (20) of the plasterboard layers (2) of said heated and cooled panels (1) or of neutral panels (1').

11. A heated and cooled wall according to any one of claims 6 to 10, **characterized in that** on the outer surface of said layers of insulating material (3) flush with the edges (30) thereof in which the recesses (7) are formed, there are fixed supporting frames (9) in the form of sheet metal sections with a C-shaped cross section.

12. A heated and cooled wall according to claim 11, **characterized in that** between said supporting frames in the form of sheet metal sections with a C-shaped cross section (9) there is disposed an insulating covering (90) able to cover said headers (8, 8', 108, 108').

13. A heated and cooled wall according to any one of claims 6 to 12, **characterised in that** it comprises a peripheral expansion joint (102; 102') disposed along the periphery of the wall.

14. A heated and cooled wall according to claim 13, **characterized in that** said peripheral expansion joint (102) is obtained by means of an air space.

15. A heated and cooled wall according to claim 13, **characterized in that** said peripheral expansion joint (102') is a gasket made of foamed polyethylene, polystyrene, rubber or the like provided with one or more adhesive sides.
